Europäisches Patentamt

European Patent Office

Office européen des brevets

(11) Veröffentlichungsnummer: **0 334 249**
**A2**

## (12) EUROPÄISCHE PATENTANMELDUNG

(21) Anmeldenummer: 89104897.7

(22) Anmeldetag: 18.03.89

(51) Int. Cl.⁴: **B32B 31/30**

(30) Priorität: 25.03.88 DE 3810087

(43) Veröffentlichungstag der Anmeldung:
27.09.89 Patentblatt 89/39

(84) Benannte Vertragsstaaten:
AT CH DE ES FR GB IT LI NL

(71) Anmelder: **Baus, Heinz Georg**
**Wartbodenstrasse 35**
**CH-3626 Hünibach-Thun(CH)**

(72) Erfinder: **Baus, Heinz Georg**
**Wartbodenstrasse 35**
**CH-3626 Hünibach-Thun(CH)**

(74) Vertreter: **Klose, Hans, Dipl.-Phys. et al**
**Kurfürstenstrasse 32**
**D-6700 Ludwigshafen(DE)**

(54) **Verfahren zur Herstellung von Mehrschicht-Platten.**

(57) In einem Verfahren zur Herstellung von Mehrschicht-Platten werden zwei mittels Extrudern gelieferte Kunststoffbahnen (12, 14) unter Einschluß einer Struktur (40) mittels einer Walzenanordnung (22) miteinander verbunden, wobei wenigstens eine der Kunststoffbahnen (12, 14) transparent ist. Das Verfahren soll dahingehend weitergebildet werden, daß mit geringem Fertigungsaufwand Strukturen unterschiedlichster Zusammensetzung und Formgebung verarbeitet werden können. Es wird vorgeschlagen, daß in einem ersten Verfahrensschritt die Struktur (40) auf eine Trägerbahn (18) als eine dünne Schicht aufgebracht wird und daß in einem zweiten Verfahrensschritt im Walzenspalt (64) der Walzenanordnung (22) die Struktur (40) von der Trägerbahn (18) gelöst und mit der Kunststoffbahn (12) verbunden wird. In einem dritten Verfahrensschritt wird auf die dünne Struktur (40) die zweite Kunststoffbahn (14) aufgebracht.

EP 0 334 249 A2

## Verfahren zur Herstellung von Mehrschicht-Platten

Die Erfindung bezieht sich auf ein Verfahren zur Herstellung von Mehrschicht-Platten gemäß den im Oberbegriff des Patentanspruchs 1 angegebenen Merkmalen.

In der US-A-42 38 266 ist ein Verfahren der genannten Art beschrieben, gemäß welchem zwei aus Extrudern gelieferte Kunststoffbahnen unter Einschluß eines von einer Rolle abgewickelten Strukturbandes miteinander verbunden werden. Jedem der beiden Extruder ist eine separate Walzenanordnung zugeordnet, welche räumlich getrennt voneinander aufgestellt sind. Die mit dem Strukturband verbundene erste Bahn muß über geeignete Zuführvorrichtungen zu der anderen beabstandet angeordneten Walzenanordnung des zweiten Extruders gefördert werden. Aufgrund des Abstandes der beiden Walzenanordnungen erfolgt eine nicht unerhebliche Abkühlung der ersten Bahn, oder es müssen insoweit zusätzliche Maßnahmen getroffen werden. Die beiden separaten Walzenanordnungen erfordern einen entsprechenden Aufwand hinsichtlich Investitionskosten und Platzbedarf, zumal für die Synchronisation der beiden Walzenanordnungen hinsichtlich Drehzahl und Abzugsgeschwindigkeit geeignete Maßnahmen zusätzlich notwendig sind. Das zur Verstärkung dienende Strukturband wird vollständig zwischen die Kunststoffbahnen eingebettet und von diesen umschlossen.

Ferner ist aus der US-A 44 48 739 ein Verfahren bekannt, bei welchem die beiden Kunststoffbahnen und das Strukturband einer gemeinsamen Walzenanordnung, welche als Drei-Walzen-Kalander ausgebildet ist, zugeführt werden. Als Strukturband kann textiles Gewebe, beispielsweise Gardinenstoff, vorgesehen werden. Dieses Gewebe ist in der fertigen Platte durch die transparenten Kunststoffschichten hinduch sichtbar. Desweiteren ist in der US-A beschrieben, zwecks Erzeugung einer Struktur auf die Oberfläche einer der Kunststoffbahnen Farbkörper aufzubringen und nachfolgend auf diese Farbkörper sowie Oberfläche der genannten ersten Kunststoffbahn die zweite Kunststoffbahn aufzulegen und anschließend mit einer Walzenanordnung die Verbindung herzustellen. Definierte Muster und Strukturen können auf diese Weise praktisch nicht erzeugt werden. Auch das Aufsprühen von Farbe auf eine der Kunststoffbahnen wird den Anforderungen der Praxis nicht gerecht, da nach dem Extrudieren die Kunststoffbahn zunächst abgekühlt wird, damit Farbe aufgetragen werden könnte. Die nachfolgend erforderliche Erwärmung zum Verbinden mit der zweiten Kunststoffbahn erhöht die Betriebskosten und erfordert zudem eine weitere Walzenanordnung.

Der Erfindung liegt die Aufgabe zugrunde, das Verfahren der gattungsgemäßen Art dahingehend weiterzubilden, daß mit geringem Aufwand Strukturen zwischen die Bahnen eingebracht werden können. Der apparative Aufwand und der Energieeinsatz zur Durchführung dieses Verfahrens soll gering sein. Strukturen unterschiedlichster Zusammensetzung, und zwar insbesondere unterschiedlicher Farb- und Formgebung, sollen problemlos verarbeitet werden können, wobei das Umrüsten auf eine andere Struktur mit geringem Zeitaufwand und mit hoher Funktionssicherheit durchgeführt werden soll.

Die Lösung dieser Aufgabe erfolgt gemäß den im Kennzeichen des Patentanspruchs 1 angegebenen Merkmalen.

Nach dem vorgeschlagenen Verfahren können zwischen die transparenten Kunststoffbahnen sehr dünne Strukturen in Form von dünnen Farbschichten mit hoher Funktionssicherheit und mit überraschend geringem Aufwand eingebracht werden. In einem ersten Verfahrensschritt wird auf eine Trägerbahn die Struktur quasi im Endlosverfahren aufgebracht. Die Trägerbahn kann bevorzugt aus Papier bestehen, auf dessen eine Oberfläche die Struktur aufgebracht wird. Das Aufbringen der Struktur erfolgt zweckmäßig in einem Druckverfahren, so daß nachfolgend die Struktur als eine dünne Farbschicht auf der Trägerbahn vorliegt. Die Struktur kann ferner aus einer Vielzahl von dünnen Fäden, welche ggfs. unterschiedliche Farben aufweisen können, bestehen, die mittels eines Klebers oder durch Adhäsion auf der Trägerbahn haften. Die dünne Struktur weist erfindungsgemäß eine Dicke kleiner 0,1 mm, bevorzugt kleiner als 0,01 mm auf. Ferner muß die Struktur nicht die gesamte Fläche der Trägerbahn bedecken, sondern es können auch nur Teile der Gesamtfläche mit einer Farbschicht oder anderen Strukturelementen versehen sein. Wesentlich ist bei allen Ausführungsformen, daß beim Einführen in den Walzenspalt gemeinsam mit der einen Kunststoffbahn die Struktur von der Trägerbahn gelöst und von der Kunststoffbahn übernommen wird. Das Ablösen und Übernehmen erfolgt erfindungsgemäß unter Ausnutzung der im Walzenspalt vorherrschenden Wärme. In dem dritten Verfahrensschritt erfolgt die Verbindung und die Einbettung der dünnen Strukturschicht zwischen die beiden transparenten Kunststoffbahnen. Ist die Strukturschicht beispielsweise streifenartig ausgebildet, wobei über die Breite der Kunststoffbahnen betrachtet freie Zwischenräume vorhanden sind, so erfolgt in diesen Zwischenräumen eine unmittelbare Verbindung und über die Strukturschicht eine mittelbare Verbindung der Kunststoffbahnen.

Die Trägerbahn mit der Struktur oder Farbschicht kann auf eine Rolle aufgewickelt werden und für die abschließende Fertigung der Mehrschicht-Platten bereitgehalten werden. Im Rahmen der Erfindung können

2

auf diese Weise Rollen mit den unterschiedlichsten Strukturen bereitgehalten werden, die dann bedarfsweise zwischen die Mehrschicht-Platten eingebracht werden. Es versteht sich, daß die dünne Schicht auf der Trägerbahn die unterschiedlichsten Muster, Farben, Formen usw. aufweisen können. Werden die Schichten im Druckverfahren aufgebracht, so kann die Struktur aus einer Vielzahl von dünnen Farbschichten aufgebaut sein, um das gewünschte Design zu erhalten. Die Trägerbahn mit der Strukturschicht wird in den Spalt der Walzenanordnung gemeinsam mit der einen Kunststoffbahn eingebracht. Die Strukturschicht löst sich erfindungsgemäß von der Trägerbahn und haftet hinter dem Spalt auf der Kunststoffbahn. Die von der Strukturschicht befreite Trägerbahn wird aus dem Walzenspalt abgezogen und steht ggfs. zur weiteren Beschichtung mit einer weiteren Strukturschicht wieder zur Verfügung. Die mit der Strukturschicht versehene erste Kunststoffbahn wird zusammen mit der zweiten Kunststoffbahn einem weiteren Walzenspalt zugeführt, in welchen die Verbindung der beiden Kunststoffbahnen und das Einschließen der Strukturschicht zwischen diese erfolgt.

Die Strukturschicht ist derart ausgebildet und/oder auf der Trägerbahn angeordnet, daß sie bei den im ersten Walzenspalt vorherrschenden Temperaturen zuverlässig von der Trägerbahn gelöst wird. Hierzu ist zweckmäßigerweise eine Zwischenschicht zwischen der Trägerbahn und der Strukturschicht vorhanden, die insbesondere als ein bei einer vorgegebenen Temperatur lösbarer Lack ausgebildet ist. Bei einer zweckmäßigen Ausführungsform weist beispielsweise die aus dem Extruder geförderte erste Kunststoffbahn eine Temperatur von ca. 220 Grad C auf, wobei im Walzenspalt eine entsprechend niedrigere Temperatur herrscht. Die Zwischenschicht ist auf diese Temperaturen erfindungsgemäß eingestellt und durch das Aufweichen und Lösen dieser Zwischenschicht wird die Strukturschicht von der Trägerbahn abgelöst und auf die Kunststoffbahn übernommen.

In einer weiteren zweckmäßigen Ausgestaltung wird das Ablösen der Struktur, insbesondere der Farbschicht, im Walzenspalt von der Trägerbahn dadurch gewährleistet, daß die Adhäsionskräfte zwischen der Struktur und der Trägerbahn für die im Walzenspalt herrschende Temperatur kleiner sind als die Adhäsionskräfte zwischen der Struktur und der Kunststoffbahn. Diese besondere Einstellung wird insbesondere durch eine besondere Ausbildung der Oberfläche der Trägerbahn erreicht. Zweckmäßig weist die Trägerbahn eine sehr glatte Oberfläche auf, welche das Ablösen der Struktur begünstigt. Desweiteren gelangen solche Werkstoffe für die Struktur zum Einsatz, welche in dem im Walzenspalt vorherrschenden Temperaturbereich gut auf der Oberfläche der Kunststoffbahn haften, hingegen eine nicht unwesentlich geringere Haftung auf der Trägerbahn aufweisen.

Um die Trägerbahn vor einer übermäßigen Erwärmung zu schützen, wird die Walze, auf welcher die Trägerbahn unmittelbar aufliegt, gekühlt. Die Walze weist hierzu Kanäle auf, die von einem zum Wärmetransport geeigneten Mittel durchströmt werden. Die vom Extruder gelieferten Bahnen weisen eine Temperatur in der Größenordnung von 220°C auf und die Walzen werden im Rahmen der Erfindung auf einer wesentlich niedrigeren Temperatur gehalten, damit die Strukturen nicht beschädigt werden und ein ordnungsgemäßer Übergang der Struktur von der Trägerbahn auf die erste Kunststoffbahn erfolgen kann. Um den Beginn des Verfahrens zu erleichtern, werden die Walzen zweckmäßig vor dem Einführen der Kunststoffbahn sowie der Trägerbahn in den Walzenspalt bereits auf die erforderliche Temperatur gebracht. Als Mittel zum Kühlen und/oder Erwärmen der Walzen ist besonders Wasser geeignet, wobei selbstverständlich auch andere Mittel vorgesehen werden. Wichtig ist, daß geeignete Heiz- und/oder Kühlvorrichtungen vorgesehen sind, mittels welchen vor dem Anfahren der Vorrichtung zunächst das genannte Mittel und in der Folge die Walzen der Walzenanordnung auf die erforderliche Temperatur gebracht werden und nachfolgend nach Beginn der Produktionsaufnahme auf der erforderlichen Temperatur gehalten werden.

Gemäß einer weiteren wichtigen Ausgestaltung werden die Walzen, zwischen welchen die Trägerbahn und die erste Kunststoffbahn eingeführt werden, in der Weise gekühlt, daß die Walze, auf welcher die Trägerbahn aufliegt eine höhere Temperatur aufweist als die Walze, an welcher die erste Kunststoffbahn anliegt. Die Temperaturdifferenz liegt zweckmäßig im Bereich zwischen 30° und 10° Celsius, wobei eine Temperaturdifferenz von im wesentlichen 15° bis 25° Celsius sich als besonders zweckmäßig erwiesen hat. Aufgrund dieser Temperaturdifferenz wird das Ablösen der Struktur, die insbesondere als Farbschicht ausgebildet ist, von der Trägerbahn begünstigt und andererseits die Übernahme auf die Kunststoffbahn erleichtert.

Die Struktur wird im ersten Verfahrensabschnitt bevorzugt durch ein Heißsiegelverfahren, vorzugsweise Heißsiegeldruck-oder Heißsiegelkaschierverfahren, auf die Trägerbahn aufgebracht. Die Struktur wird hierbei einerseits unter Einwirkung von Wärme und andererseits unter Druck auf die Trägerbahn gebracht und mit dieser verbunden. Im Walzenspalt wird aufgrund der vergleichsweise hohen Temperatur der vom Extruder unmittelbar gelieferten Kunststoffbahn die durch das Heißsiegelverfahren hergestellte Verbindung wieder gelöst und die Struktur geht die Verbindung mit der die größere Temperatur aufweisenden Kunststoffbahn ein. Die für das Heißsiegelverfahren geeigneten Druckfarben erfahren hierbei praktisch keine Farbveränderung, so daß die Farben und Formen der zwischen die Kunststoffbahn eingebrachten Strukturen in der fertigen Platte durch die transparenten Kunststoffbahnen hindurch praktisch unverändert sichtbar sind.

In den Unteransprüchen sowie der nachfolgenden Beschreibung eines Ausführungsbeispieles sind weitere wichtige Merkmale sowie Vorteile enthalten.

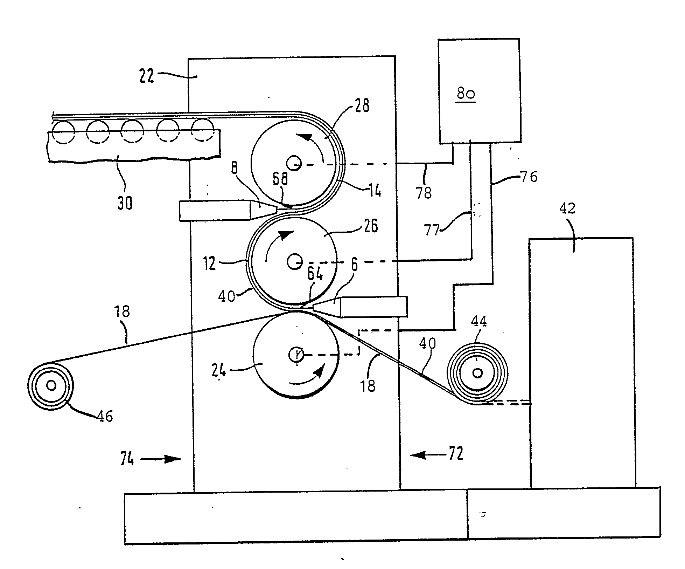

Die Erfindung wird nachfolgend anhand des in der Zeichnung dargestellten Ausführungsbeispieles näher erläutert.

Die zur Durchführung des Verfahrens vorgesehene Vorrichtung enthält eine Walzenanordnung 22 mit drei Walzen 24, 26, 28. Die im Prinzip dargestellte Walzenanordnung 22 ist zweckmäßig als ein Drei-Walzen-Kalander ausgebildet. Von den Extrudern sind der Einfachheit halber nur die Breitschlitzdüsen 6, 8 angedeutet und es ist ersichtlich, daß die dazugehörenden Extruder jeweils auf der einen bzw. anderen Seite 72 bzw. 74 der Walzenanordnung angeordnet sind. Aus den Düsen 6, 8 werden extrudierte, transparente Kunststoffbahnen 12 bzw. 14 in den ersten Walzenspalt 64 bzw. den zweiten Walzenspalt 68 geliefert. Die Drehrichtung der Walzen 24, 26, 28 ist mittels Pfeilen angedeutet und die fertige Mehrschichtbahn gelangt hinter der Walzenanordnung 22 auf eine nachgeordnete Rollbahn 30, auf welcher eine Abkühlung erfolgt, so daß nachfolgend mittels geeigneten Schneidwerkzeugen die endlos gefertigte Mehrschichtbahn auf die gewünschte Plattengröße unterteilt wird.

Vor dem Extrudieren und Verbinden der Kunststoffbahnen 12, 14 erfolgt in einem vorhergehenden Verfahrensschritt die Verbindung einer Struktur 40 mit einer Trägerbahn 18. Hierzu dient zweckmäßig eine Druckvorrichtung 42, um die als Farbschicht ausgebildete Struktur 40 auf die Trägerbahn 18 aufzubringen. Es sei angemerkt, daß die Trägerbahn 18, welche beispielsweise aus Papier besteht, eine wesentlich größere Materialstärke aufweist als die sehr dünne Struktur bzw. Farbschicht. Die aus der Druckvorrichtung 42 gelieferte Trägerbahn 18 mit der aufgebrachten Struktur 40 kann bedarfsweise vorgefertigt und auf Rollen 44 bereitgehalten werden. Es können die unterschiedlichsten Strukturen für das Einbringen zwischen die Kunststoffbahnen errfindungsgemäß vorgefertigt und bereitgehalten werden, so daß bei äußerst kurzen Umrüstzeiten sehr schnell Mehrschichtbahnen unterschiedlichster Gestaltungen hergestellt werden können. Die Verbindung der Struktur 40 mit der Trägerbahn kann räumlich und zeitlich getrennt von dem Einbringen der Struktur zwischen die Kunststoffbahnen erfolgen. Andererseits kann im Rahmen der Erfindung der erste Verfahrensschritt, nämlich Aufbringen der Struktur auf die Trägerbahn, auch unmittelbar örtlich und zeitlich vor der Walzenanordnung 22 bzw. dem Einbringen der Struktur zwischen die beiden Kunststoffbahnen 12, 14 erfolgen.

Dem ersten Walzenspalt 64 wird die Trägerbahn 18 und die darauf angeordnete Farbschicht oder Struktur 40 gemeinsam mit der ersten Kunststoffbahn 12 zugeführt. Im Walzenspalt 64 wird die dünne Struktur 40 von der Trägerbahn 18 gelöst und von der Kunststoffbahn 12 übernommen. Hinter dem Walzenspalt 64 haftet die Struktur 40 fest auf der Oberfläche der ersten Kunststoffbahn 12, während die Trägerbahn 18 allein abgezogen und auf eine Wickelvorrichtung 46 aufgewickelt wird. Im zweiten Spalt 68 wird danach die zweite Kunststoffbahn 14 mit der ersten Kunststoffbahn und der Struktur 40 in der Weise vereinigt, daß die Struktur 40 zwischen den beiden transparenten Kunststoffbahnen 12 und 14 sich befindet.

Die Walzen 24, 26, 28 stehen über Leitungen 76 bis 78 mit einer Einrichtung 80 in Verbindung. Die Walzen enthalten hier nicht weiter dargestellte Kanäle, welche an die Leitungen 76 bis 78 angeschlosse sind und über die Leitungen 76 bis 78 von einem geeigneten Mittel, genannt sei hier Wasser, durchströmt werden. Die Einrichtung ist zumindest zum Kühlen des genannten Mittels ausgebildet, um während des Betriebes die Temperatur der Walzen auf dem geforderten Wert im wesentlichen konstant zu halten. Es hat sich darüberhinaus als zweckmäßig erwiesen, die Einrichtung 80 auch zum Erwärmen des Mittels auszubilden, um vor Betriebsbeginn die Walzen auf die erforderliche Temperatur aufzuheizen. Damit wird gewährleistet, daß unmittelbar nach dem Ein bringen der Kunststoffbahnen 12, 14 sowie der Trägerbahn 18 in die Walzenanordnung 22 eine ordnungsgemäße Produktion praktisch ohne Anfahrverluste erreicht wird. Die Einrichtung 80 ist in der Weise ausgelegt, dar die dem ersten Walzenspalt 64 begrenzenden Walzen 24, 26 auf unterschiedliche Temperaturen gefahren werden können. Die Walze 24, auf welcher die Trägerbahn 18 aufliegt, wird im Rahmen dieser Erfindung auf einer höheren Temperatur gehalten als die andere Walze 26 des Walzenspalts 64. Die Temperatur der Walze 24 wird vor allem auf einem Wert zwischen 10° bis 30° Celsius, insbesondere zwischen 15° und 25° Celsius, größer vorgegeben als die Temperatur der anderen Walze 26. Aufgrund dieser Temperaturdifferenz wird ein zuverlässiger Übergang der Struktur von der Trägerbahn auf die erste Kunststoffbahn 12 im ersten Walzenspalt 64 sichergestellt.

4

| 6, 8 | Breitschlitzdüse |
|---|---|
| 12, 14 | Kunststoffbahn |
| 18 | Trägerbahn |
| 22 | Walzenanordnung |
| 24, 26, 28 | Walze |
| 30 | Rollbahn |
| 40 | Strukturschicht |
| 42 | Druckvorrichtung |
| 44 | Rolle |
| 46 | Wickelvorrichtung |
| 64, 68 | Walzenspalt |
| 72, 74 | Seite |
| 76 - 78 | Leitung |
| 80 | Einrichtung |

**Ansprüche**

1. Verfahren zur Herstellung von Mehrschicht-Platten aus extrudierbarem Kunststoff, bei welchem Verfahren zwei mittels Extrudern, insbesondere mit Breitschlitzdüsen, gelieferte Bahnen aus Kunststoff unter Einschluß einer Struktur mittels einer Walzenanordnung miteinander verbunden werden, wobei wenigstens eine Kunststoffbahn transparent ist,

dadurch gekennzeichnet,

daß in einem ersten Verfahrensschritt die Struktur (40) auf eine Trägerbahn (18) als eine dünne Schicht aufgebracht wird,

daß in einem zweiten Verfahrensschritt die Trägerbahn (18) mit der Struktur (40) und ferner die erste Kunststoffbahn (12) dem ersten Walzenspalt (64) der Walzenanordnung (22) zugeführt werden, wobei die Struktur (40) von der Trägerbahn (18) gelöst und von der ersten Kunststoffbahn (12) übernommen wird und nachfolgend die Trägerbahn (18) aus der Walzenanordnung (22) abgezogen wird,

und daß in einem dritten Verfahrensschritt die zweite Kunststoffbahn (14) auf die von der ersten Kunststoffbahn (14) getragene dünne Schicht (40) aufgebracht wird.

2. Verfahren nach Anspruch 1, dadurch gekennzeichnet, daß die dünne Struktur (40) zur Trägerbahn (18) eine schwache Verbindung aufweist und im Walzenspalt (64) zur ersten Kunststoffbahn (12) eine wesentlich größere Haftkraft wirksam ist.

3. Verfahren nach Anspruch 1 oder 2, dadurch gekennzeichnet, daß im ersten Walzenspalt (64) aufgrund der dort vorhandenen Temperatur die Verbindungskraft zwischen der Struktur (40) und der Trägerbahn (18) kleiner wird als die Haftkraft zwischen der Struktur (40) und der ersten Kunststoffbahn (12).

4. Verfahren nach einem der Ansprüche 1 bis 3, dadurch gekennzeichnet, daß die Trägerbahn (40) eine sehr glatte Oberfläche aufweist und die dünne Struktur (40) im wesentlichen nicht in das Material der Trägerbahn (18) eindringt.

5. Verfahren nach einem der Ansprüche 1 bis 4, dadurch gekennzeichnet, daß die Struktur (40) mittels Adhäsionskräften oder mittels einer Zwischenschicht, welche insbesondere aus einem Lack besteht, auf der Oberfläche der Trägerbahn angeordnet ist, wobei im Walzenspalt (64) die Adhäsionsverbindung oder die Verbindung mittels der Zwischenschicht gelöst wird.

6. Verfahren nach einem der Ansprüche 1 bis 5, dadurch gekennzeichnet, daß in dem Walzenspalt (64) die eine Walze (24), auf welcher das Trägerband (18) mit der dünnen Struktur (14) aufliegt, auf einer höheren Temperatur gehalten wird als die andere Walze (26), auf welcher die vom Extruder unmittelbar gelieferte erste Kunststoffbahn (12) aufliegt.

7. Verfahren nach Anspruch 6, dadurch gekennzeichnet, daß für die erste Walze (24) ein Temperaturwert vorgegeben wird, der insbesondere zwischen 10° bis 30° Celsius, bevorzugt zwischen 15° und 25° Celsius, größer ist als die Temperatur der anderen Walze (26).